# EUROPÄISCHE PATENTANMELDUNG

(11) **EP 0 566 762 A1**
(43) Veröffentlichungstag der Anmeldung: **27.10.1993**
(21) Anmeldenummer: 92106935.7
(22) Anmeldetag: 23.04.1992
(51) Int. Cl.: F16B 13/12

(54) **Dübel**

(71) Anmelder: IOBB PRODUKTIDEEN VORAUSENTWICKLUNG UND PROBLEMLÖSUNGEN GmbH, D-87437 Kempten (DE)
(72) Erfinder: Bauch, Karl, W-8960 Kempten (DE); Brosowitsch, Josef, A-2000 Stockerau (AT)
(74) Vertreter: Fiener, Josef

(57) **Zusammenfassung**

Zur Schaffung eines Dübels für Mauerwerk, Beton und dgl., welcher für mehrere Durchmesserbereiche von Montageschrauben geeignet sein soll, wird vorgeschlagen, daß der Dübel (1) gegeneinander versetzte Längsschlitze (8 bis 13) aufweist, welche wechselweise jeweils eine Stirnseite (23, 26) des Dübels (1) durchsetzen und in mindestens vier zusammenhängende Segmente (2 bis 7) unterteilt ist, wobei jedes Segment (2 bis 7) im Bereich der beiden Stirnseiten (23, 26) gegenüberliegend versetzt je eine elastische Verbindungsstelle (14 bis 19) zum jeweiligen Nachbarsegment aufweist.

## Beschreibung

Die Erfindung betrifft einen Dübel für Mauerwerk, Beton und dgl. gemäß den oberbegrifflichen Merkmalen des Patentanspruches 1.

Üblicherweise werden Dübel aus Kunststoff oder Metall verwendet, welche mehrere am Vorderende des Dübels vorgesehene Längsschlitze aufweisen und beim Anziehen der eingesetzten Schraube die vorderen Dübelenden radial nach außen gepreßt werden und somit der Dübel samt Schraube in der Montagebohrung festgeklemmt wird. Ferner gibt es Dübel, welche nach dem sog. Ausknicksystem funktionieren: Der Dübel ist an der Hinterseite geschlossen, so daß beim Anziehen der Schraube durch die Verkürzung des Dübels eine Ausbauchung erreicht wird und somit ein Festklemmen in der Haltebohrung. Die derzeit bekannten Dübelausführungen sind jeweils nur für einen bestimmten Schraubendurchmesser geeignet; für die diversen Montagearbeiten ist daher immer ein umfangreiches, millimeterweise abgestuftes Sortiment an Dübeln für die unterschiedlichen Durchmesserbereiche erforderlich.

Demzufolge liegt der Erfindung die Aufgabe zugrunde, einen "Multi-Dübel" zu schaffen, welcher für mehrere Durchmesserbereiche geeignet ist.

Diese Aufgabe wird gelöst durch einen Dübel mit den Merkmalen des Patentanspruches 1.

Dadurch, daß der Dübel aus mindestens vier elastisch zusammenhängenden Segmenten besteht, wobei jedes Segment an der Vorder- und Rückseite gegenüberliegend je eine Verformungsachse in Art eines Scharniers oder eines elastischen Gelenkes aufweist, kann der Dübel an beiden Stirnseiten auseinandergezogen bzw. zusammengedrückt werden, wobei jedes der Segmente gleichzeitig um die gegenüberliegenden Gelenk- bzw. Verformungsachsen verformt wird und dabei die Außenform des Dübels eine kegelstumpfförmige oder zylindrische Form annimmt. Damit wird erreicht, daß sich der erfindungsgemäße Dübel verschiedenen Bohrungsdurchmessern im Mauerwerk anpaßt und somit eine einzige Dübelgröße für unterschiedliche Schraubendurchmesser geeignet ist. Durch das Eindrehen der Schraube wird der Dübel - ähnlich wie bei herkömmlichen Bauarten - in der Bohrung gespreizt und somit der Halteeffekt erzielt.

Vorteilhafte Ausgestaltungen sind Gegenstand der Unteransprüche.

Nachfolgend werden mehrere Ausführungsbeispiele des erfindungsgemäßen Dübels anhand der Zeichnungen näher erläutert.

Es zeigen:
- Fig. 1 bis 3: einen Dübel in Seiten-, Drauf- und Stirnansicht;
- Fig. 4 und 5: einen Dübel in vereinfachter Ausführung in Seiten- und Stirnansicht;
- Fig. 6 und 7: einen Dübel mit umfangsseitigen Sperrkanten in Seiten- und Stirnansicht;
- Fig. 8 bis 11: einen aus länglichen Materialabschnitten hergestellten Dübel in Seiten-, Drauf- und Stirnansicht sowie als Abwicklung;
- Fig. 12 und 13: einen aus einer zusammenhängenden Dreiecksform hergestellten Dübel in Drauf- und Seitenansicht;
- Fig. 14 und 15: einen aus der Form gemäß Fig. 12 und 13 gefalteten Dübel jedoch mit rundem Querschnitt in Seiten- und Stirnansicht;
- Fig. 16 und 17: einen Dübel gemäß Fig. 14 und 15, der in eine Bohrung eingesetzt ist;
- Fig. 18 und 19: eine gemäß Fig. 1 bis 3 abgewandelte Ausführung mit kegelstumpfförmiger Grundform in Seiten- und Stirnansicht.

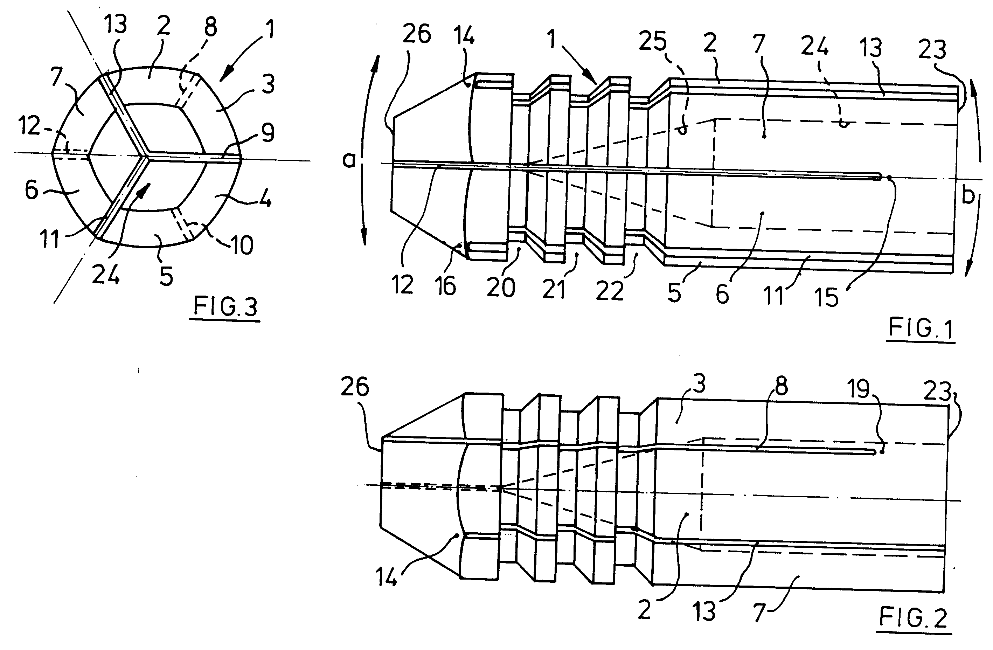

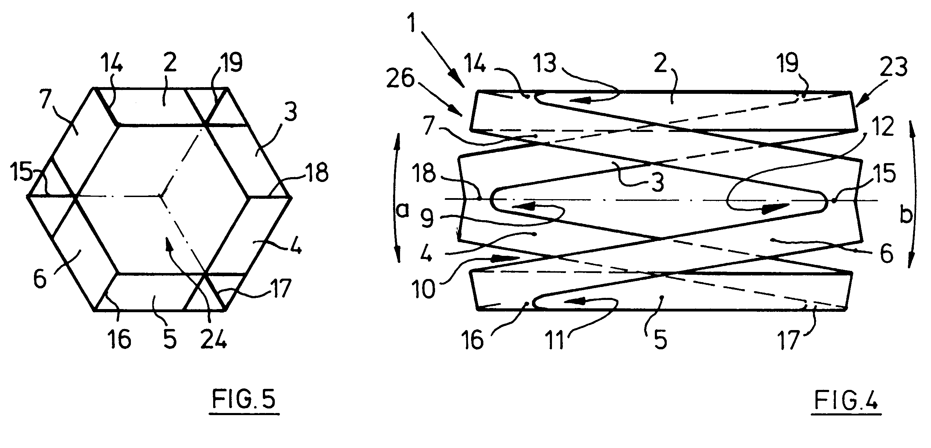

Wie aus Fig. 1 bis 3 erkennbar, weist ein Dübel 1 mehrere Längsschlitze 8, 9, 10, 11, 12, 13 auf, durch welche der Dübel 1 in beispielsweise sechs zickzackförmig zusammenhängende Segmente 2, 3, 4, 5, 6, 7 unterteilt wird, welche an ihren Enden jeweils gegenüberliegend mit dem Nachbarelement mittels elastischer Übergänge oder Verbindungsstellen 14, 15, 16, 17, 18, 19 verbunden sind. Diese Verbindungsstellen 14 bis 19 sind jeweils zwischen dem geschlossenen Ende der Längsschlitze 8 bis 13 und den jeweiligen Stirnseiten 23 und 26 ausgebildet und beim Aufspreizen verformbar. Hierzu nehmen die Längsschlitze 8 bis 13 etwa neunzig Prozent der Dübellänge ein. Der Dübel 1 weist ferner am Umfang - wie an sich bekannt - mehrere zahnartige Ausnehmungen 20, 21, 22 auf, um die Haltekraft in der Montagebohrung zu erhöhen. Wie aus den Fig. 1 und 2 ersichtlich, sind die Längsschlitze 8, 9, 10, 11, 12, 13 nicht durchgehend ausgeführt, sondern enden jeweils gegenüberliegend versetzt kurz vor der jeweiligen Stirnfläche. Der Dübel 1 weist von der hier rechten Stirnseite 23 ausgehend eine zentrale Bohrung 24 zur Aufnahme einer Schraube oder eines Nagels auf, welche in der Einsetzrichtung sich kegelförmig verjüngt. Dieser Kegelbereich 25 dient zur Spreizung des Dübels 1 an der hier linken Dübelspitze 26, wodurch sich die hier von links von der Stirnseite 26 eingearbeiteten Längsschlitze 8, 12 (und verdeckt 10) V-förmig aufweiten. Der Dübel 1 ist im Gegensatz zu bekannten, nur im Spitzenbereich spreizbaren Dübeln an beiden Stirnseiten 23 und 26 aufspreizbar, wie dies durch die Pfeile a und b angedeutet ist, und aus diesem Grund für mehrere Schraubendurchmesser geeignet. Hierbei weiten sich auch die ungeradzahligen Längsschlitze 13, 11 (und verdeckt 9) V-förmig auf. Der Dübel 1 kann durch die von beiden Stirnflächen 23 und 26 aus wechselweise eingearbeiteten Längsschlitze 8 bis 13 in radialer Richtung ziehharmonikaartig auseinandergezogen werden (vgl. auch Fig. 4), wobei die einhüllende äußere Form im wesentlichen zylinderförmig bleibt. Wie in Fig. 3 erkennbar, muß die Dübelform nicht exakt rund sein, vielmehr kann dieser auch z. B. eine angenäherte Sechskantform annehmen.

Die Figuren 4 und 5 zeigen eine vereinfachte korbartige Ausführung des Dübels 1, wobei die einzelnen Dübelsegmente 2, 3, 4, 5, 6, 7 in einem Schnitt, quer zur Längsrichtung betrachtet, unterschiedliche Querschnittsformen, z. B. Dreiecke, Trapeze aufweisen können. Aufgrund des an beiden Dübelstirnenden 23, 26 unterschiedlich verformbaren Durchmessers kann der Dübel auch eine kegelstumpfförmige Form einnehmen. Fig. 4 zeigt den Dübel schematisch in seiner Grundposition, wobei dieser aufgrund der elastischen Verbindungsstellen 14, 15, 16, 17, 18, 19 zusammendrückbar ist und so in einem gebohrten Montageloch durch die radiale Federwirkung festgeklemmt wird. Ein Mitdrehen bei Beginn der Einschraubung wird so ausgeschaltet. Es sei darauf hingewiesen, daß die Verbindungsstellen 14 bis 19 hier gegenüber der Ausführung in Fig. 1 bis 3 schmäler als radial ausgerichtete Stege ausgeführt sind und damit elastischer sind.

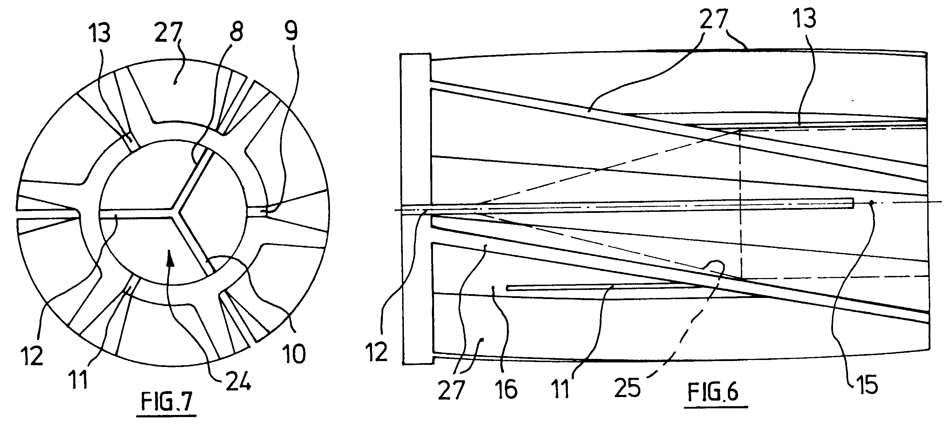

Die Figuren 6 und 7 zeigen einen Dübel mit am Umfang angeordneten zahnartigen Sperrkanten 27, welche auch - wie dargestellt - schraubenförmig ausgebildet sein können. Diese Sperrkanten 27 sind vor allem für weiche Materialien, in welchen der Dübel halten soll, geeignet. Die übrigen Bauteile sind mit den gleichen Bezugszeichen wie in den vorausgehenden Figuren bezeichnet.

Die Spreizung des beschriebenen Dübels erfolgt, im Unterschied zu den bisher bekannten Dübelformen, gleichzeitig über dessen ganzen Länge bzw. paßt sich, je nach dem Zustand der Montagebohrung dieser optimal an. Dadurch ergibt sich eine wesentlich größere Anpreß- bzw. Auflagefläche, die Haltbarkeit des Dübels wird dadurch erhöht und das Mauerwerk oder ähnliche Baustrukturen wie Leichtbauwände werden radial nicht so stark belastet.

Es sei darauf hingewiesen, daß trotz der hier dargestellten bevorzugten Ausführung mit sechs Segmenten und sechs Längsschlitzen (je drei von entgegengesetzten Stirnseiten aus) auch die Ausführung mit vier Segmenten und dementsprechend vier Längsschlitzen zum beabsichtigten Erfolg führt. Ebenso ist es möglich, daß die Segmente 2, 3, 4, 5, 6, 7 in Längsrichtung schraubenförmig ausgebildet sind bzw. von der Seite betrachtet auch V-förmig in einem stumpfen Winkel zusammenlaufen. Ferner ist es auch möglich, den Dübel 1 mit einem - wie an sich bekannt - Anschlagbund an der Stirnseite 23 zu versehen, womit ein zu tiefes Einbringen in die Montagebohrung vermieden wird. Desweiteren ist es auch möglich, den Dübel 1 selbstschneidend auszubilden, mit einer, wie bei einem Spiralbohrer ausgebildeten konischen Dübelspitze 23 oder als selbstschneidende Ganzmetallausführung. Schließlich sei noch erwähnt, daß der Dübel 1 nicht nur mit einer Schraube befestigbar ist, sondern die Dübelfixierung auch durch Einschlagen eines Nagels erreicht werden kann; vor allem aufgrund der Tatsache, daß sich der Dübel über die ganze Länge gleichermaßen radial verformt.

Je nachdem, ob der Dübel vier, sechs oder mehr Segmente aufweist, ergibt sich die Anzahl der Spreizelemente, so daß beispielsweise bei sechs Segmenten, eine Dreifachspreizung erzielt wird. Vorzugsweise sollten sechs Segmente 2, 3, 4, 5, 6, 7 ausgeführt werden, da dann der Dübel 1 eine exakte statisch bestimmte Verformbarkeit aufweist. Selbstverständlich sind auch mehr als sechs Segmente denkbar, der Dübel ist dann allerdings statisch unbestimmt und wird auch relativ weich.

Wird der Dübel 1 von der Stirnseite 23 aus in Achsrichtung betrachtet (Fig. 5), sind die einzelnen elastischen Übergänge oder Verbindungsstellen 14, 15, 16, 17, 18, 19 in einem Winkel zueinanderstehend erkennbar, welcher bei sechs Segmenten 2, 3, 4, 5, 6, 7 60 Grad beträgt; bei mehr als sechs Segmenten 2, 3, 4, 5, 6, 7 360 Grad/n (n...Anzahl der Segmente). Dieser Teilungswinkel muß allerdings nicht gleich groß sein; es kann für bestimmte Einsatzzwecke auch eine unterschiedlich breite Segment-Teilung vorgesehen werden.

Weiters sei noch erwähnt, daß die beispielsweise prismatischen Querschnitte der sechs Segmente 2, 3, 4, 5, 6, 7 gemäß Fig. 4 über deren gesamte Länge vorzugsweise gleich groß sind, jedoch auch in Montagerichtung der Querschnitt linear zunehmend ausgebildet sein wird, zur Erhöhung der Spreizwirkung durch die Montageschraube. Schließlich sei noch die Möglichkeit beschrieben, das erfindungsgemäße Dübelsystem zur Konstruktion von sog. Zuganker-Dübeln zu verwenden, wobei ein oder mehrere kegelstumpfförmige Spreizanker den Dübel von der Mitte her radial durch Einschlagen oder Einziehen mittels Spannschraube aufweiten und ihn so über dessen gesamte Länge im Bohrloch festklemmen. Die Zuganker-Dübel weisen ein Innengewinde auf und können aus Metall oder Kunststoff ausgeführt sein. Da sich mit Änderung des Innendurchmessers auch die Gewindesteigung ändert, besteht auch die Möglichkeit als Montageschrauben selbstfurchende Schrauben zu verwenden, wobei das Innengewinde in den Dübeln entfallen könnte.

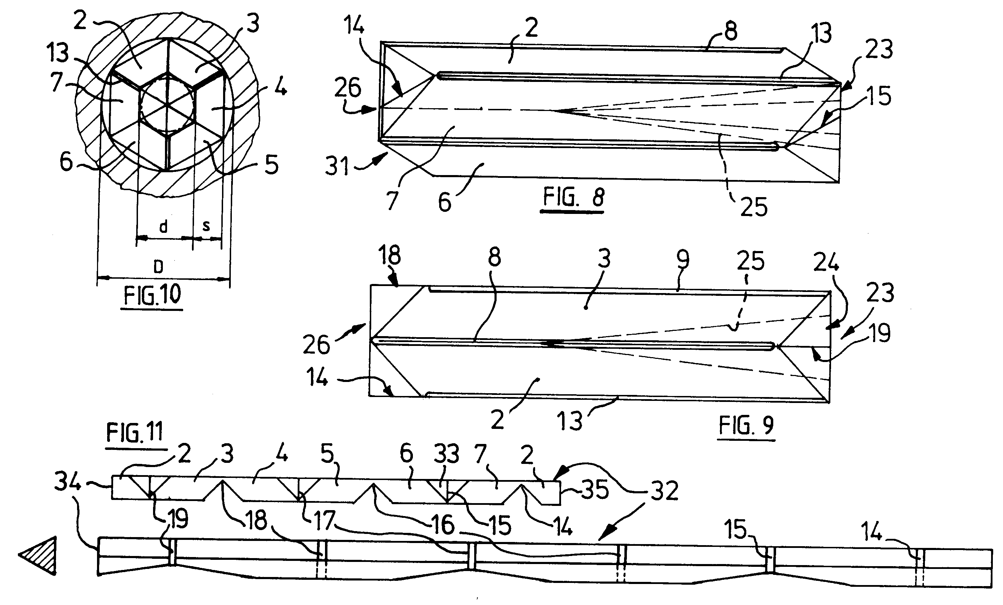

In den Figuren 8 bis 11 ist eine besonders einfache Ausführungsform eines Dübels 31 dargestellt, welche keine aufwendige Spritzgußform erfordert und aus Materialabschnitten 32 von einer Stange z. B. aus Nylon mit dreieckigem oder prismatischen Querschnitt und der Materialstärke s gefertigt werden kann. Die weiteren Bauteile sind wie in den vorausgehenden Figuren bezeichnet. Gemäß den Figuren 8 bis 11 besteht dieser einfache Dübel 31 aus sechs gleichen Segmenten 2, 3, 4, 5, 6, 7, welche an den jeweils dazwischenliegenden elastischen Verbindungsstellen 14, 15, 16, 17, 18, 19 V-förmige Ausnehmungen 33 aufweisen (siehe die Abwicklung hierzu in verkleinertem und vergrößertem Maßstab in Fig. 11). Je drei dieser Verbindungsstellen befinden sich nach dem Zusammenfalten an den Verbindungsstellen 14 bis 19 (ähnlich dem zickzackartigen Zusammenklappen eines Zollstocks) an der hier rechten Stirnseite 23 und drei an der gegenüberliegenden, die Spitze bildenden Stirnseite 26 des Dübels 31. Dieser Dübel 31 kann daher leicht aus dem länglichen Stababschnitt 32 (Fig. 11) gefertigt werden, wobei nach dem Falten zu einem korbartigen Gebilde die jeweils eine Hälfte des Segmentes 2 bildenden Endflächen 34 und 35 des Materialabschnittes 32 zusammengeschweißt werden. Auch besitzt der Dübel 31 eine sich verjüngende pyramidenförmige, zentrisch angeordnete Ausnehmung 24 zur Erhöhung der Spreizwirkung der in Montagerichtung eingeschraubten Schraube bzw. des Nagels. Der Bohrungsdurchmesser D für die Montagebohrung z. B. in einer Wand beträgt dabei etwa Schrauben- bzw. Zentralbohrungsdurchmesser d + 2,3 x s, wie aus Fig. 10 ersichtlich ist.

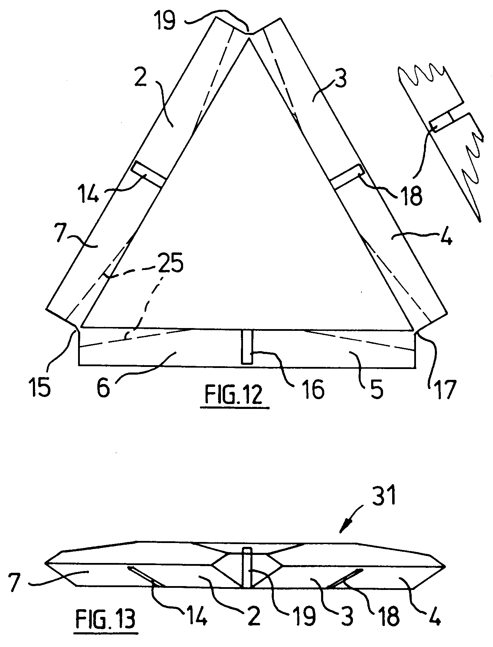

In den Figuren 12 und 13 ist hierzu wiederum eine abgewandelte Ausführung des Dübels 31 dargestellt, die eine zusätzliche Verschweißung der Enden 34 und 35 einspart. Aufgrund der leichten Verformbarkeit und Faltbarkeit der Dübelkonstruktion kann zu dessen Herstellung eine flache Spritzgußform verwendet werden, bei welcher die sechs Segmente 2, 3, 4, 5, 6, 7 in einer Ebene liegen. Die Figuren 12 und 13 zeigen einen derartigen, einer ebenen Spritzgußform entnommenen Dübel 31, welcher in Fig. 10 in zusammengefaltetem Zustand dargestellt ist. Der Dübel wird dabei so produziert, daß die hier sechs Verbindungsstellen 14, 15, 16, 17, 18, 19 als dünne Übergangsstellen (sog. Foliengelenke) zwischen den Segmenten 2, 3, 4, 5, 6, 7 ausgebildet sind und die Faltachsen bilden. Die Segmente 2, 3, 4, 5, 6, 7 weisen ferner zur Bildung des sich verjüngenden inneren Kegel- bzw. Pyramidenteiles 25 schräge Abflachungen auf, wie dies an der linken Ecke bezeichnet ist . Die Dübel werden aus der Spritzgußform, wie in Fig. 12 dargestellt, als Dreiecksform entnommen und können so auch im Stapel platzsparend verpackt in den Verkehr gebracht werden; der Endverbraucher faltet dann bei Montage durch tetraederförmiges Aufstellen, wobei die Verbindungsstellen 14, 16, 18 in Fig. 12 die Tetraederspitze darstellen, den Dübel 31 korbartig wie eine Feder zusammen, welcher dann in die Montagebohrung eingesteckt werden kann und sich dort radial bereits vor Eindrehung der Schraube festklemmt. Der Querschnitt des Dübels ist beispielsweise ein gleichseitiges Dreieck, kann aber auch, wie bereits erwähnt, gekrümmte Außenflächen aufweisen.

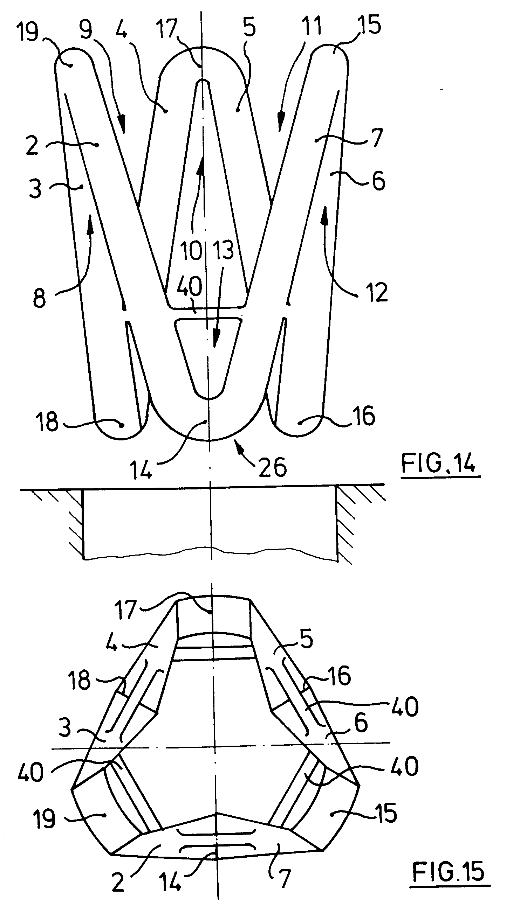

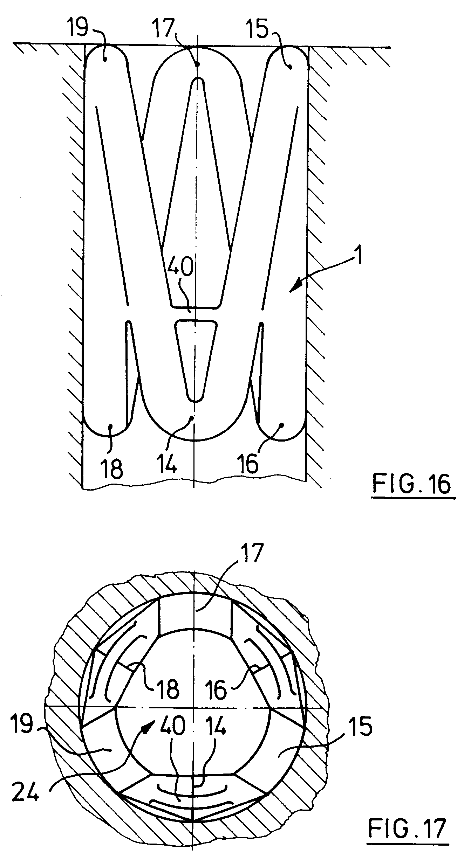

Die Figuren 14 bis 17 zeigen eine ähnliche Ausführung wie in den Figuren 4 und 5, jedoch mit radienförmiger Ausbildung der elastischen Verbindungsstellen 14 bis 19 zwischen den Segmenten 2 bis 7. Dies ergibt eine hohe Dauerfestigkeit bei mehrfachem Einsatz des Dübels. Die Längsschlitze 8 bis 13 sind hierbei gegeneinander gerichtet V-förmig ausgebildet und weisen jeweils zur Verbindung der benachbarten Segmente 2 bis 7 Verbindungsstege 40 auf, die je nach Anordnung in Axialrichtung des Dübels eine mehr oder minder konische Außenform des Dübels herstellen. Durch diese Vorformung des Dübels 1 in einer Kegelstumpfform läßt sich eine platzsparende Lagerung und Bevorratung sowie einfachste Verpackung durch Ineinanderschichtung der kegelstumpfförmigen Dübel erreichen. Beim Eindrehen der Schraube oder des Befestigungsnagels werden diese relativ dünnen Verbindungsstege zur Erleichterung der Montage gedehnt oder zerrissen und ermöglichen sodann eine ungehinderte radiale Ausdehnung des Dübels. Wie in Fig. 14 dargestellt, wird durch die Verbindungsstege 40 die Dübelspitze 26 zusammengehalten, so daß sich der Dübel leicht in die angedeutete Montagebohrung einführen läßt. Beim weiteren Eintreiben in die Montagebohrung wird dann die entgegengesetzte Stirnseite im Bereich der elastischen Verbindungsstellen 15, 17 und 19 in radialer Richtung zusammengedrückt, so daß sich in der Montagebohrung ein fester Sitz des Dübels ergibt. Diese Einbausituation ist in Fig. 16 dargestellt, wobei sich die einzelnen Längsschlitze 8 bis 13 durch das Eintreiben in die Montagebohrung zu einem spitzeren Winkel hin verengt haben und sich aufgrund der Elastizität des Dübelmaterials, bevorzugt Kunststoff an die Bohrungswandung anlegen. Beim Einsetzen der Montageschraube werden dann die vorderen Enden im Bereich der elastischen, geradzahligen Verbindungsstellen 14, 16, 18 nach außen gedrückt und somit ein fester Sitz in der Montagebohrung erreicht.

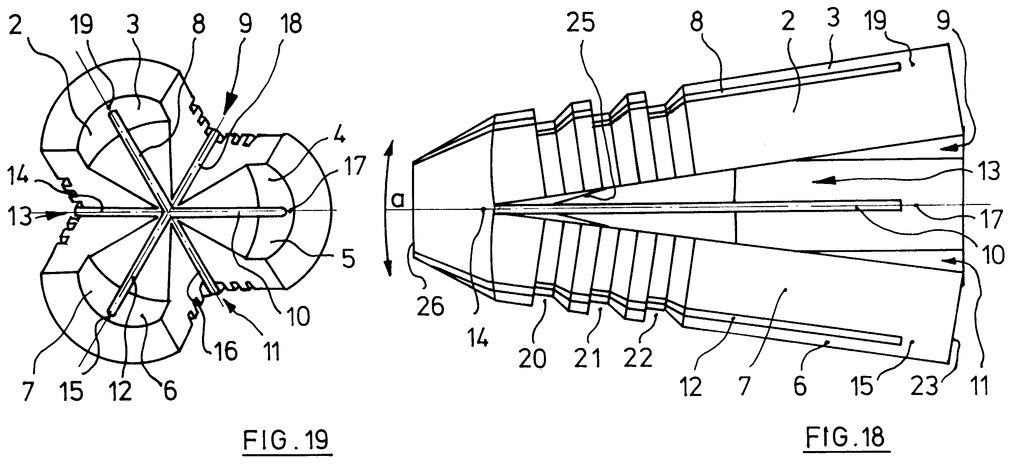

In den Figuren 18 und 19 ist ein Dübel mit einer ähnlichen Außenform wie in den Figuren 1 bis 3 dargestellt, jedoch ähnlich wie in den Figuren 14 bis 17 im Bereich der hinteren Stirnseite 23 radial nach außen vorgespannt, so daß sich unter Bildung von V-förmigen Längsschlitzen 9, 11 und 13 eine kegelstumpfförmige Außenform ergibt. Die von der anderen Stirnseite eingearbeiteten Längsschlitze 8, 10 und 12 sind dahingegen im unbelasteten Zustand parallel zueinander verlaufend ausgebildet, so daß sich bei der Montage die vorderen Enden unter Aufweitung der Längsschlitze 8, 10 und 12 radial nach außen aufspreizen. Diese Dübelform ist ebenso für mehrere Durchmesserbereiche von Schrauben geeignet und weist, wie bei den Figuren 14 bis 17 erläutert, eine leichtere Montierbarkeit durch leichteres Einsetzen aufgrund der konischen Außenform auf. Durch das radiale Aufspreizen an der Stirnfläche 23 ergibt sich nach dem Eindrücken des Dübels in die Montagebohrung ebenfalls ein radiales Abspreizen der hinteren Enden und damit ein fester Sitz, so daß ein Mitdrehen des Dübels verhindert wird. Darüberhinaus läßt sich diese Dübelform ebenfalls durch Ineinanderschichtung der einzelnen kegelstumpfförmigen Dübel kompakter und einfacher verpacken, beispielsweise in einer Art Stangenmagazin. Hierdurch wäre beispielsweise ein bessere Handhabung bei einem automatischen Setzen von Dübeln mit Hilfe eines Elektro- oder Druckluftwerkzeuges möglich.

## Patentansprüche

1. Dübel für Mauerwerk, Beton und dgl. mit mehreren, in Längsrichtung des Dübels angeordneten Längsschlitzen, sowie einer Zentralbohrung zur Aufnahme eines Befestigungselementes, insbesondere einer Montageschraube, dadurch gekennzeichnet, daß
der Dübel (1, 31) gegeneinander versetzte Längsschlitze (8, 9, 10, 11, 12, 13) aufweist, welche wechselweise jeweils eine Stirnseite (23, 26) des Dübels (1, 31) durchsetzen und in mindestens vier zusammenhängende Segmente (2, 3, 4, 5, 6, 7) unterteilt ist, wobei jedes Segment (2 bis 7) im Bereich der beiden Stirnseiten (23, 26) gegenüberliegend versetzt je eine elastische Verbindungsstelle (14, 15, 16, 17, 18, 19) zum jeweiligen Nachbarsegment aufweist.

2. Dübel nach Anspruch 1,
dadurch gekennzeichnet, daß
die Längsschlitze (8, 9, 10, 11, 12, 13) am Dübelumfang mit gleichmäßiger Teilung gegeneinander versetzt sind.

3. Dübel nach Anspruch 1 oder 2,
dadurch gekennzeichnet, daß
die Längsschlitze (8, 9, 10, 11, 12, 13) sich über etwa 90% der Dübellänge erstrecken.

4. Dübel nach einem der Ansprüche 1 bis 3,
dadurch gekennzeichnet, daß
sechs Längsschlitze (8, 9, 10, 11, 12, 13) vorgesehen sind.

5. Dübel nach einem der Ansprüche 1 bis 4,
dadurch gekennzeichnet, daß
die Längsschlitze (8, 9, 10, 11, 12, 13) in unbelastetem Zustand parallel zueinander verlaufend ausgerichtet sind.

6. Dübel nach einem der Ansprüche 1 bis 4,
dadurch gekennzeichnet, daß
die Längsschlitze (8, 9, 10, 11, 12, 13) in unbelastetem Zustand V-förmig ausgebildet sind.

7. Dübel nach einem der Ansprüche 1 bis 6,
dadurch gekennzeichnet, daß
die Verbindungsstellen (14 bis 19) weniger als 10% der Dübellänge einnehmen.

8. Dübel nach Anspruch 7,
dadurch gekennzeichnet, daß
die Verbindungsstellen (14 bis 19) als dünnwandige, radial ausgerichtete Stege ausgebildet sind.

9. Dübel nach einem der Ansprüche 1 bis 7,
dadurch gekennzeichnet, daß
die Verbindungsstellen (14 bis 19) radienförmig mit etwa gleicher Wandstärke wie die Segmente (2 bis 7) ausgebildet sind.

10. Dübel nach einem der Ansprüche 1 bis 9,
dadurch gekennzeichnet, daß
die Segmente (2 bis 7) einen kreisbogenförmigen prismatischen oder runden Querschnitt aufweisen.

11. Dübel nach einem der Ansprüche 1 bis 10,
dadurch gekennzeichnet, daß
die Segmente (2 bis 7) in Längsrichtung des Dübels (1) schraublinienförmig ausgerichtet sind.

12. Dübel nach einem der Ansprüche 1 bis 11,
dadurch gekennzeichnet, daß
die äußere Grundform des Dübels (1) zylindrisch ausgebildet ist.

13. Dübel nach einem der Ansprüche 1 bis 11,
dadurch gekennzeichnet, daß
die äußere Grundform des Dübels (1) in unbelastetem Zustand kegelstumpfförmig ausgebildet ist.

14. Dübel nach einem der Ansprüche 1 bis 13,
dadurch gekennzeichnet, daß
am Außenumfang des Dübels (1) zahnartige Sperrkanten (27) vorgesehen sind.

15. Dübel nach einem der Ansprüche 1 bis 14,
dadurch gekennzeichnet, daß
der Dübel eine metallische Spitze in Form einer Bohrerspitze aufweist.

16. Dübel nach einem der Ansprüche 1 bis 15,
dadurch gekennzeichnet, daß
zwischen benachbarten Segmenten (2 bis 7) Verbindungsstege (40) vorgesehen sind.

17. Dübel nach einem der Ansprüche 1 bis 16,
dadurch gekennzeichnet, daß
der Dübel (31) aus einem länglichen Materialabschnitt (32) durch Falten um die durch Ausnehmungen (33) gebildeten elastischen Verbindungsstellen (14 bis 19) hergestellt ist.

18. Dübel nach einem der Ansprüche 1 bis 16,
dadurch gekennzeichnet, daß
der Dübel (31) als ebenes Spritzgußteil hergestellt ist, das durch Aufklappen um die Verbindungsstellen (14 bis 19) zur Dübelform hergestellt ist.
